# EUROPÄISCHE PATENTSCHRIFT

(11) **EP 1 684 020 B1**
(45) Veröffentlichungstag und Bekanntmachung des Hinweises auf die Patenterteilung: **03.10.2012**
(21) Anmeldenummer: 06000666.5
(22) Anmeldetag: 13.01.2006
(51) Int. Cl.: F24D 19/10

(54) **Verfahren zum Regeln einer Solaranlage**
Method for controlling a solar heating installation
Procédé de régulation d'une installation solaire

(30) Priorität: 21.01.2005 DE 102005002932
(43) Veröffentlichungstag der Anmeldung: 26.07.2006
(73) Patentinhaber: ROBERT BOSCH GMBH, 70442 Stuttgart (DE)
(72) Erfinder: Kosok, Jürgen, 48565 Steinfurt (DE)

(56) Entgegenhaltungen:
- DE-A1- 2 705 474
- DE-A1- 2 912 071
- DE-A1- 19 731 343
- FR-A1- 2 403 522

## Beschreibung

Die Erfindung betrifft ein Verfahren zum Regeln einer Solaranlage zur Warmwasserbereitung nach dem Oberbegriff des Patentanspruches 1.

Solaranlagen für Warmwasserbereitung bestehen im Wesentlichen aus einem Warmwasserspeicher, an den eine Warmwasserleitung angeschlossen ist. Dieser besitzt als spezieller Solarspeicher normalerweise eine Heizschlange als Wärmetauscher für die über einen Solarkreislauf eingebrachte Wärme im unteren Bereich sowie einen weiteren Wärmetauscher im oberen Bereich für die so genannte Nachladung durch ein Heizgerät.

Soll eine bestehende Heizungsanlage so umgerüstet werden, um solare Wärme zu nutzen, muss entweder ein Solarspeicher eingebaut werden oder es kann der vorhandene Warmwasserspeicher verwendet werden. Allerdings besitzt dieser nur einen Wärmetauscher im unteren Bereich, über den dann sowohl die über den Solarkreislauf herangeführte Wärme als auch die Wärme aus dem Heizgerät eingebracht werden muss. In diesem Fall wird der Solarkreislauf über einen Zwischenwärmetauscher geführt und bildet einen Sekundärkreislauf. Auf der Primärseite sind der Vorlauf und der Rücklauf von Heizgerät und

Zwischenwärmetauscher jeweils miteinander verbunden. In beiden Vorlaufleitungen ist jeweils vor dem Knotenpunkt eine Pumpe mit einem Rückschlagventil angeordnet. Mit einem Regelgerät wird der Betrieb der Pumpen gemäß den Messwerten von Temperaturfühlern, beispielsweise für die Temperatur im Warmwasserspeicher und die Kollektortemperatur, gesteuert.

Für einen günstigen Wirkungsgrad der Solaranlage ist es natürlich prinzipiell wichtig, dass vorrangig das solare Wärmeangebot zum Aufheizen des Warmwasserspeichers genutzt wird. Eine Nachladung durch das Heizgerät soll daher nach Möglichkeit nur in wenigen Fällen erfolgen. Trotzdem kann die Warmwasser-Solltemperatur nicht allzu tief abgesenkt werden, weil dann möglicherweise Komforteinbußen entstehen, wenn relativ lange Aufheizzeiten bis zum Erreichen des Warmwasser-Sollwertes entstehen. Die Ausnutzung bzw. Anwendbarkeit von diesen gegenläufigen Betriebsmöglichkeiten hängt aber sehr stark von den Ansprüchen und Gewohnheiten der Nutzer ab, denn die Vorteile einer Betriebsart bringen möglicherweise andere Nachteile mit sich.

Allgemein sind Regeleinrichtungen für Heizungsanlagen mit zwei einstellbaren Schaltfunktionen für Sommerbetrieb und Winterbetrieb bekannt. Ein Beispiel dafür geht aus der DE 199 15 300 A1 hervor. Allerdings werden dabei die Schaltfunktionen für Sommer- und Winterbetrieb mit dem Umschaltventil für Warmwasser- und Heizbetrieb eines Heizgerätes verknüpft, um einen Verbrühungsschutz an Warmwasserzapfstellen zu erreichen. Die DE 199 31 787 A1 zeigt ein Verfahren zur Regelung einer Solaranlage, bei dem die Außentemperatur erfasst wird, um an einer entsprechenden Außentemperaturschwelle nach vorgegebenen Betriebsarten zu unterscheiden. Der einzustellende Grenzwert für die Außentemperatur entspricht dabei im Wesentlichen dem Temperaturwert für die Sommer-/Winterbetrieb-Umschaltung eines Heizgerätes.

Aus der DE 197 31 343 A1 ist eine Brauchwasserspeicherahlage nach den merkmalen des Obergriffs des Anspruchs bekannt, welche primärseitig mit einem Solarkreislauf über einen Plattenwärmetauscher beheizt wird. Auf dessen Sekundärseite befindet sich im Kreislauf über einen Warmwasserspeiche ein Dreiwege-Verteilventil und kann in Abhängigkeit von weiteren Ventilstellungen in unterschiedlichen Höhenbereichen des Warmwasserspeichers eingeschichtet werden. Dabei wird an einem Thermostaten am Dreiwege-Verteilventil bei günstigen Sonneneinstrahlungsbedingungen eine höhere Temperatur eingestellt als bei ungünstigen Verhältnissen für eine Solarenergienutzung.

Der Erfindung liegt daher die Aufgabe zu Grunde, eine einfache Nachrüstlösung für Heizungsanlagen zu schaffen, welche zur Nutzung von Solarenergie den vorhandenen Warmwasserspeicher mit nur einem Wärmetauscher im unteren Bereich verwendet, über den sowohl die über den Solarkreislauf und einen Zwischenwärmetauscher herangeführte Wärme als auch die Wärme aus dem Heizgerät eingebracht werden muss.

Erfingdungsgemäß wird dies mit den Merkmalen des Patentanspruches 1 gelöst. Vorteilhafte Weiterbildungen sind den Unteransprüchen zu entnehmen.

Das Verfahren zum Regeln einer Solaranlage ist dadurch gekennzeichnet, dass die Regeleinrichtung mindestens zwei einstellbare Schaltfunktionen für Sommerbetrieb und Winterbetrieb aufweist, und dass mit diesen Schaltfunktion Betriebsarten, Schaltschwellen und andere zusätzliche Funktionen für den Betrieb der Solaranlage verknüpft sind.

Dabei führen die jeweiligen Schaltfunktionen zu unterschiedlichem Betriebsverhalten: Die Solaranlage ist im Sommerbetrieb auf maximale Solarerträge und einen geringeren Warmwasserkomfort ausgelegt. Dann ist die automatische Nachheizung des Warmwasserspeichers mit Wärme aus dem Heizgerät deaktiviert, so dass die Nachheizung bei Bedarf durch eine manuell zu veranlassende Einmalladung erfolgt. Diese bereits bekannte manuelle Einmalladung wird entweder manuell oder automatisch, anhand von vorgegebenen Schwellwerten für Temperaturen oder Zeiten, wieder beendet. Dagegen ist die Solaranlage im Winterbetrieb auf einen maximalen Warmwasserkomfort und geringere Solarerträge ausgelegt. Dabei erfolgt eine Nachheizung des Warmwasserspeichers mit Wärme aus dem Heizgerät automatisch, mindestens einmal täglich.

Während der Nachheizung des Warmwasserspeichers mit Wärme aus dem Heizgerät ist mindestens die Pumpe im Solarkreislauf verriegelt, denn ansonsten würde die Pumpe im Solarkreislauf während einer laufenden Nachheizung die konventionell erzeugte Wärme in den Solarkreis bringen. Wärmeverluste wären hier genauso die Folge. Dazu käme es auch, wenn ein Nutzer vergessen würde, die manuelle Einmalladung wieder zu deaktivieren. Dann kann solare Wärme nicht verwertet werden. Auch ist es vorteilhaft, die primärseitig zwischen dem Zwischenwärmetauscher und dem Knotenpunkt der Vorlaufleitungen angeordnete Pumpe zu verriegeln.

Die mindestens zwei Schaltfunktionen für Sommerbetrieb und Winterbetrieb sind flexibel über die Regeleinrichtung einstellbar. In einer bevorzugten Ausführungsform können die beiden Schaltfunktionen für Sommerbetrieb und Winterbetrieb auch vorgegeben und monats- oder datumsbezogen über die Regeleinrichtung einstellbar sein. Weiterhin besteht die Möglichkeit, dass die Schaltfunktionen für Sommerbetrieb und Winterbetrieb vorgegeben sind und von der Regeleinrichtung aus gemessenen Betriebswerten automatisch als flexible Vorgabe-Parameter korrigiert und/oder optimiert werden.

Mit der Erfindung steht ein einfaches Verfahren, insbesondere eine einfache Nachrüstlösung für Heizungsanlagen zur Verfügung, welches zur Nutzung von Solarenergie den vorhandenen Warmwasserspeicher mit nur einem Wärmetauscher im unteren Bereich verwendet. Sowohl die über den Solarkreislauf und einen Zwischenwärmetauscher herangeführte Wärme als auch die Wärme aus dem Heizgerät kann damit optimal in einen herkömmlichen Warmwasserspeicher eingebracht werden. Der Gesamtwirkungsgrad der Anlage wird verbessert, aber trotzdem werden die Wünsche des Anlagennutzers ausreichend berücksichtigt. Die Schaltfunktionen für Sommerbetrieb und Winterbetrieb sind im Hinblick auf die Bedienung sehr anschaulich, auch wenn im Hintergrund andere regeltechnische Funktionen und Einstellungen mit dieser Vorwahl verknüpft sind.

### Die Zeichnung stellt ein Ausführungsbeispiel der Erfindung dar. Es zeigt:

- Fig.1:: Anlagenschema,
- Fig. 2:: Einstellungsbeispiel für einen hohen Solarertrag bei geringerem Warmwasserkomfort und
- Fig. 3:: Einstellungsbeispiel für einen hohen Warmwasserkomfort bei geringerem Solarertrag.

Die Solaranlage zur Warmwasserbereitung besteht aus einem Heizgerät 1 mit Regeleinrichtung 2, einem konventionellen Warmwasserspeicher 3, welcher über einen Wärmetauscher 4 im unteren Bereich beheizt wird und einen Temperaturfühler 5 zur Erfassung der Warmwassertemperatur aufweist, sowie einem an den Wärmetauscher 4 angeschlossenen Wärmeträgerkreislauf mit Vorlaufleitung 6 und Rücklaufleitung 7. Damit kann wechselweise Wärme aus dem Heizgerät 1 oder Wärme aus einem Solarkreislauf 8 über einen zwischengeschalteten Wärmetauscher 9 und über mindestens einen Sonnenkollektor 10 eingespeist werden. Neben der Pumpe 11 im Solarkreislauf 8 befindet sich eine Pumpe 12 zwischen dem Heizgerät 1 und dem Knotenpunkt der Vorlaufleitungen 6 sowie eine Pumpe 13 zwischen dem Wärmetauscher 9 und dem Knotenpunkt der Vorlaufleitungen 6.

Eine entsprechende Regeleinrichtung 14 für die Pumpen 11, 12 und 13, insbesondere für die bei einer Anlagen-Nachrüstung hinzu kommenden Pumpen 11 und 13, ist entweder separat angeordnet und mit der Regeleinrichtung 2 des Heizgerätes 1 verknüpft oder sie kann auch direkt, beispielsweise als Zusatzmodul, in die Regeleinrichtung 2 integriert sein. Weiterhin wird ein Temperaturfühler 15 zur Erfassung der Kollektortemperatur daran angeschlossen.

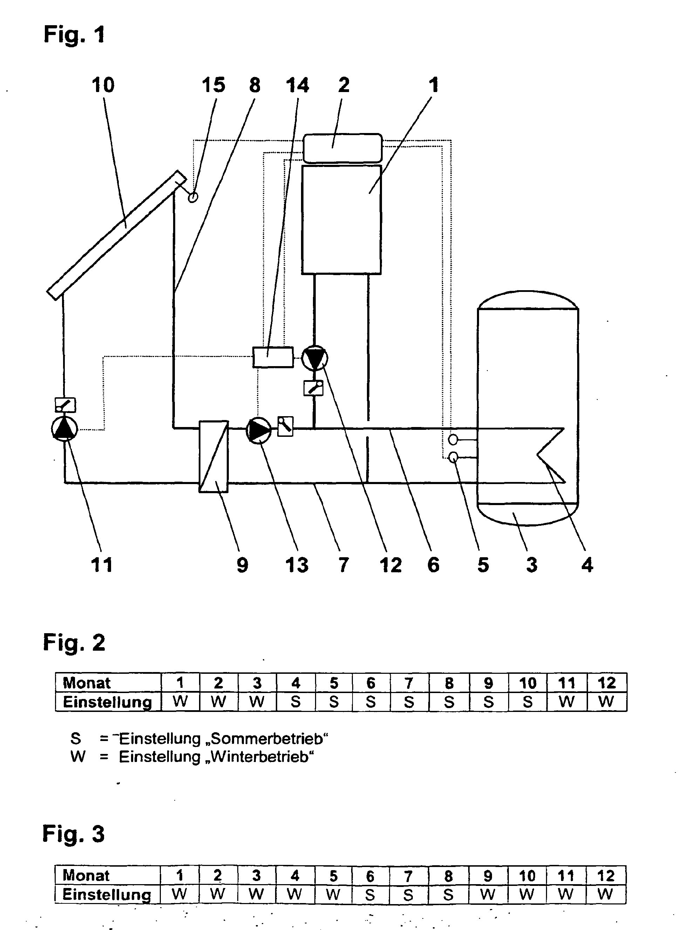

Gemäß den Fig. 2 und 3 sind unterschiedliche Einstellungen "S" für Sommerbetrieb und "W" für Winterbetrieb für die Monate eines Jahres dargestellt. Dabei zeigt Fig. 2 ein Beispiel für einen Nutzer, der wenig Wert auf den Komfort und einen hohen Wert auf solare Erträge legt. Für die Mehrzahl der Monate eines Jahres läuft die Heizungsanlage im Sommerbetrieb. Die Nachheizung des Warmwasserspeichers 3 wird damit in den Sommermonaten automatisch deaktiviert und erfolgt nur durch manuelles Zuschalten einer Einmalladung. Zusätzlich können zum Beispiel mit der Einstellungen "S" für Sommerbetrieb gleichzeitig weitere Schaltfunktionen oder Schaltschwellen im Hintergrund verändert werden, um einen hohen Solarertrag zu erreichen. Dazu gehört beispielsweise das Absenken des Warmwasser-Sollwertes, um eine Nachheizung zu verhindern.

Dagegen zeigt Fig. 3 ein Beispiel für einen Nutzer, der mehr Wert auf den Komfort legt. Im Winter und in den Übergangszeiten wird der Warmwasserspeicher 3 täglich einmal über mit dem Heizgerät 1 auf Soll-Temperatur gebracht. Diese Nachheizung erfolgt dann zu einer Uhrzeit, bei der ein Solarbetrieb nicht zu erwarten ist, also zum Beispiel am frühen Abend, weil in den darauf folgenden Abend- und Morgenstunden ein Abnahme zu erwarten ist. Insgesamt verschlechtert sich damit bei mehr Komfort die Ausnutzung von solaren Erträgen, weil in der überwiegenden Anzahl der Monate die Einstellung "W" für Winterbetrieb gewählt wurde und sich der Warmwasserspeicher 3 wegen der Nachheizung oft auf einem relativ hohen Temperaturniveau befindet. Solarwärme kann somit erst beim Überschreiten dieses Temperaturniveaus eingebracht werden.

## Patentansprüche

1. Verfahren zum Regeln einer Solaranlage zur Warmwasserbereitung, bestehend aus mindestens einem konventionellen Warmwasserspeicher (3) mit Temperaturfühlern (5) zur Erfassung der Warmwassertemperatur und einem Wärmetauscher zur Beheizung des Warmwasserspeichers (3) im unteren Bereich, welcher an einen Wärmeträgerkreislauf (6, 7) angebunden ist sowie wechselweise mit Wärme aus einem Heizgerät (1) oder mit Wärme aus einem Solarkreislauf (8) über einen zwischengeschalteten Wärmetauscher (9) und über mindestens einen Sonnenkollektor (10) versorgt wird, einem Temperaturfühler (15) zur Erfassung der Kollektortemperatur, einer Regeleinrichtung (2) sowie jeweils einer Pumpe (11, 12, 13) in jedem Kreislauf, wobei die Regeleinrichtung (2, 14) mindestens zwei einstellbare Schaltfunktionen für Sommerbetrieb und Winterbetrieb aufweist, und dass mit diesen Schaltfunktion Betriebsarten, Schaltschwen und andere zusätzliche Funktionen für den Betrieb der Solaranlage verknüpft sind,
**dadurch gekennzeichnet, dass** die Solaranlage im Sommerbetrieb auf maximale Solarerträge und einen geringeren Warmwasserkomfort ausgelegt ist, indem eine automatische Nachheizung des Warmwasserspeichers (3) mit Wärme aus dem Heizgerät (1) deaktiviert ist, damit die Nachheizung bei Bedarf durch eine manuell zu veranlassende Einmalladung erfolgt, und wobei die Solaranlage im Winterbetrieb auf maximalen Warmwasserkomfort und geringere Solarerträge ausgelegt ist, indem eine Nachheizung des Warmwasserspeichers (3) mit Wärme aus dem Heizgerät (1) automatisch, mindestens einmal täglich, erfolgt.

2. Verfahren nach Anspruch 1,
**dadurch gekennzeichnet, dass** während der Nachheizung des Warmwasserspeichers (3) mit Wärme aus dem Heizgerät (1) mindestens die Pumpe (11) im Solarkreislauf (8) verriegelt ist.

3. Verfahren nach den Ansprüchen 1 oder 2,
**dadurch gekennzeichnet, dass** die mindestens zwei Schaltfunktionen für Sommerbetrieb und Winterbetrieb flexibel über die Regeleinrichtung (2, 14) einstellbar sind.

4. Verfahren nach einem der Ansprüche 1 bis 3,
**dadurch gekennzeichnet, dass** die mindestens zwei Schaltfunktionen für Sommerbetrieb und Winterbetrieb vorgegeben und monats- oder datumsbezogen über die Regeleinrichtung (2, 14) einstellbar sind.

5. Verfahren nach einem der Ansprüche 1 bis 4,
**dadurch gekennzeichnet, dass** die mindestens zwei Schaltfunktionen für Sommerbetrieb und Winterbetrieb vorgegeben sind und von der Regeleinrichtung (2, 14) aus gemessenen Betriebswerten automatisch als flexible Vorgabe-Parameter korrigiert und/oder optimiert werden.

## Claims

1. Method for regulating a solar plant for water heating, consisting of at least one conventional hot water storage system (3) with temperature sensors (5) for detecting the hot water temperature and a heat exchanger for heating the hot water storage system (3) in the lower region, which is connected to a heat transfer medium circuit (6, 7) and is alternately provided with heat from a heater (1) or with heat from a solar circuit (8) via an interposed heat exchanger (9) and via at least one solar collector (10), a temperature sensor (15) for detecting the collector temperature, a regulator device (2) and respectively one pump (11, 12, 13) in each circuit, wherein the regulating device (2, 14) has at least two adjustable switching functions for summer operation and winter operation and that operating modes, switching threshold and other additional functions for operation of the solar plant are linked to these switching functions, **characterised in that** in summer operation the solar plant is designed for maximum solar yields and a lower hot water comfort whereby an automatic afterheating of the hot water storage system (3) with heat from the heater (1) is deactivated so that if required the afterheating is accomplished by a one-off charge to be triggered manually and wherein in winter operation the solar plant is designed for maximum hot water comfort and lower solar yields whereby an afterheating of the hot water storage system (3) with heat from the heater (1) is accomplished automatically, at least once a day.

2. The method according to claim 1, characterised that during the afterheating of the hot water storage system (3) with heat from the heater (1) at least one pump (11) in the solar circuit (8) is locked.

3. The method according to claims 1 or 2, **characterised in that** the at least two switching functions for summer operation and winter operation can be adjusted flexibly via the regulating device (2, 14).

4. The method according to any one of claims 1 to 3, **characterised in that** the at least two switching functions for summer operation and winter operation are predefined and can be adjusted relative to the month or date by means of the regulating device (2, 14).

5. The method according to any one of claims 1 to 4, **characterised in that** the at least two switching functions for summer operation and winter operation are predefined and are automatically corrected and/or optimised by the regulating device (2, 14) from measured operating values as flexible default parameters.

## Revendications

1. Procédé de régulation d'une installation solaire pour la production d'eau chaude, se composant d'au moins un réservoir d'eau chaude conventionnel (3) avec des sondes de température (5) pour mesurer la température de l'eau chaude et un échangeur de chaleur pour chauffer le réservoir d'eau chaude (3) dans la région inférieure, lequel est relié à un circuit de fluide caloporteur (6, 7) et est alimenté tour à tour par la chaleur provenant d'un appareil de chauffage (1) ou par la chaleur provenant d'un circuit solaire (8) grâce à un échangeur de chaleur monté de manière intermédiaire (9) et à au moins un capteur solaire (10), d'une sonde de température (15) pour mesurer la température du capteur, d'un dispositif de régulation (2) ainsi que respectivement d'une pompe (11, 12, 13) dans chaque circuit, le dispositif de régulation (2, 14) présentant au moins deux fonctions de commutation réglables pour le fonctionnement en été et pour le fonctionnement en hiver, et ces fonctions de commutation étant combinées avec des modes de fonctionnement, des seuils de commutation et d'autres fonctions additionnelles pour le fonctionnement de l'installation solaire,
**caractérisé en ce que** l'installation solaire est étudiée pour un rendement solaire maximal et un besoin en eau chaude inférieur en fonctionnement d'été en désactivant un post-chauffage automatique du réservoir d'eau chaude (3) avec de la chaleur provenant de l'appareil de chauffage (1) afin qu'en cas de besoin, le post-chauffage s'effectue grâce à une charge unique à déclencher manuellement, et l'installation solaire étant étudiée pour un besoin en eau chaude maximal et un rendement solaire plus faible en fonctionnement d'hiver **en ce qu'**un post-chauffage du réservoir d'eau chaude (3) avec de la chaleur provenant de l'appareil de chauffage (1) s'effectue automatiquement, au moins une fois par jour.

2. Procédé selon la revendication 1, **caractérisé en ce que** pendant le post-chauffage du réservoir d'eau chaude (3) avec de la chaleur provenant de l'appareil de chauffage (1), on verrouille au moins la pompe (11) dans le circuit solaire (8).

3. Procédé selon les revendications 1 ou 2, **caractérisé en ce que** ces au moins deux fonctions de commutation pour le fonctionnement d'été et le fonctionnement d'hiver sont réglables de manière flexible grâce au dispositif de régulation (2, 14).

4. Procédé selon l'une des revendications 1 à 3, **caractérisé en ce que** ces au moins deux fonctions de commutation pour le fonctionnement d'été et le fonctionnement d'hiver sont réglables de manière prédéterminée et en fonction du mois ou de la date grâce au dispositif de régulation (2, 14).

5. Procédé selon l'une des revendications 1 à 4, **caractérisé en ce que** ces au moins deux fonctions de commutation pour le fonctionnement d'été et le fonctionnement d'hiver sont prédéterminées et sont automatiquement corrigées et/ou optimisées en tant que paramètres de consigne flexibles à partir de valeurs d'exploitation mesurées par le dispositif de régulation (2, 14).
